# EUROPÄISCHE PATENTSCHRIFT

(11) **EP 2 365 239 B1**
(45) Veröffentlichungstag und Bekanntmachung des Hinweises auf die Patenterteilung: **04.03.2015**
(21) Anmeldenummer: 10002599.8
(22) Anmeldetag: 12.03.2010
(51) Int. Cl.: F16K 31/06, F16K 31/08

(54) **Vorrichtung zur Durchflussregelung eines flüssigen oder gasförmigen Mediums**
Device for regulating the flow of a fluid or gaseous medium
Dispositif destiné à la régulation du débit d'un milieu liquide ou gazeux

(43) Veröffentlichungstag der Anmeldung: 14.09.2011
(73) Patentinhaber: Asco Numatics GmbH, 75248 Ölbronn-Dürrn (DE)
(72) Erfinder: Ams, Felix, 75236 Kämpfelbach (DE); Metternich de Oliveira, Peter, 75249 Kieselbronn (DE)
(74) Vertreter: Witte, Weller & Partner Patentanwälte mbB

(56) Entgegenhaltungen:
- EP-B1- 0 741 248
- EP-B1- 0 916 049
- EP-B1- 1 013 942
- EP-B1- 1 316 749
- WO-A1-03/102454
- WO-A1-2006/075162
- WO-A1-2007/000321
- DE-A1- 4 224 389
- US-A1- 2005 012 060

## Beschreibung

Die Erfindung betrifft eine Vorrichtung zur Durchflussregelung eines flüssigen oder gasförmigen Mediums.

Eine bekannte Vorrichtung zur Regelung eines flüssigen oder gasförmigen Mediums (EP 1 536 169 A1) weist ein 2/2-Wegeventil mit einem eine von dem Medium durchströmbare Ventilöffnung steuernden Ventilglied und einem das Ventilglied betätigenden Elektromagneten auf. Das Ventilglied ist in einer in einem Ventilgehäuse ausgebildeten Ventilkammer angeordnet, in der die zwischen einem Ventileinlass und einem Ventilauslass liegende Ventilöffnung ausgebildet ist. Die Ventilöffnung ist von einem Ventilsitz umschlossen, mit dem das Ventilglied zum Schließen und Freigeben der Ventilöffnung zusammenwirkt. Der Elektromagnet weist einen Magnetkreis mit einer Magnet- oder Erregerspule, mit einer außen die Magnetspule aufnehmenden Ankerhülse, die mit einem Ankerstopfen verschlossen ist, und mit einem im innern der Ankerhülse geführten Magnetanker auf. Der Magnetanker ist mittels zweier am oberen und unteren Stirnende angeordneten Flachfedern in der Ankerhülse axial verschieblich gehalten und begrenzt zusammen mit dem Ankerstopfen einen im Magnetkreis enthaltenen Arbeitsluftspalt. Die Ankerhülse taucht in die Ventilkammer ein. Die Eintauchstelle ist gegenüber dem Ventilgehäuse mittels eines Dichtungsrings abgedichtet. Das Ventilglied weist einen Dichtungshalter mit einem in den Magnetanker axial eingesetzten Zapfen und eine im Dichtungshalter aufgenommene Dichtplatte auf, die mit dem Ventilsitz zusammenwirkt. Der Schließzustand des Ventils wird durch eine den Magnetanker beaufschlagende Ventilschließfeder herbeigeführt, die in einem Sackloch im Magnetanker einliegt und sich am Ankerstopfen abstützt und die Dichtungsplatte auf den Ventilsitz aufpresst. Bei Bestromung des Elektromagneten wird der Magnetanker gegen die Federkraft der Ventilschließfeder axial verschoben, und der Mangetanker hebt das Ventilglied vom Ventilsitz ab, wodurch die Ventilöffnung freigegeben wird und je nach Hub des Ventilglieds eine größere oder eine kleinere Mediummenge vom Ventileinlass über die Ventilkammer zum Ventilauslass strömt. Die Ventilkammer ist ständig mit Medium gefüllt, so dass das Ventilglied und das Stirnende des Mangetankers stets vom Medium umspült ist.

Die US 4,574,841 A beschreibt eine Vorrichtung zur Durchflussregelung eines flüssigen oder gasförmigen Mediums, mit einem mindestens eine Durchflussöffnung für das Medium steuernden Ventilglied und einem das Ventilglied betätigenden Elektromagneten, der einen Magnetkreis mit mindestens einer Erregerspule und einen mit dem Ventilglied starr verbundenen Magnetanker aufweist. Der Magnetanker ist zwischen im Magnetkreis vorhandenen Polstücken um eine Schwenkachse schwenkbeweglich angeordnet, wobei im Magnetanker ein Permanentmagnet angeordnet ist, dessen Magnetfluss sich über die Polstücke schließt.

Die Durchflussöffnung ist in einer zwischen Ventilanschlüssen eines Ventilgehäuses angeordneten Ventilkammer ausgebildet, wobei das Ventilglied über die starre Verbindung zu dem Magnetanker an einer zugleich als Schwenklager ausgebildeten Abdichtung gelagert ist, über die die Ventilkammer gegenüber dem Elektromagneten abgedichtet ist.

Aus der WO 03/102454 A1 ist eine Vorrichtung bekannt, bei der ein Elektromagnet zwischen zwei etwa parallelen länglichen Platten gehalten ist, die am einen Ende mittels einer nichtmagnetischen Brücke verbunden sind und die Polstücke eines Magnetkreises bilden. Seitlich neben dem Elektromagneten ist ein Magnetanker in Form einer Wippe angeordnet, an dem ein bogenförmiges Ventilglied befestigt ist, das zusammen mit dem Magnetanker um eine Achse schwenkbar ist und dabei die eine oder andere Durchflussöffnung versperrt. Der Magnetanker weist oberhalb der Schwenkachse zwei Permanentmagnete auf, die in Bezug auf die Mitte des Magnetankers beidseitig und symmetrisch angeordnet sind. Der wippenartige Magnetanker ist beidseits der Schwenkachse an den Enden von Polstücken übergriffen, derart, dass der Magnetanker aus der Horizontalstellung heraus entweder in eine oder in eine andere Schrägstellung verschwenkbar ist, in der von dem Ventilglied die eine Durchflussöffnung bzw. die andere Durchflussöffnung versperrt ist.

Aus der US 2005/0012060 A1 ist eine Vorrichtung bekannt, bei der der Magnetanker aus einem federnd aufgehängten länglichen Element besteht, an dem mittels einer elastischen Umhüllung eine längliche Membran gehalten ist, die mit zugeordneten Durchflussöffnungen von Ventilkanälen zusammenwirken kann, die in horizontaler Richtung in Abständen voneinander platziert sind. Bei Erregung des Elektromagneten wird der Magnetanker ausgehend von einer Horizontallage derart in Schrägstellung bewegt, dass ein Endbereich der Membran eine Durchflussöffnung versperrt, während ein seitlich beabstandeter anderer Endbereich der Membran eine Durchflussöffnung freigibt. Wird der Elektromagnet erregt, wird der längliche Magnetanker mittels der Feder in eine etwa horizontale Ausgangslage zurückbewegt, in der die andere Durchflussöffnung freigegeben ist und die zuvor freigegebene Durchflussöffnung verschlossen ist.

Aus der DE 42 24 389 ist eine Vorrichtung bekannt, bei der das Ventilglied aus einem in Längsrichtung T-förmigen Element gebildet ist, das dort, wo der mittlere Schenkel und die seitlichen Arme des T zusammenkommen, kippbar im Ventilgehäuse gelagert ist, wobei der Schenkel beidseitig mit einem nachgiebigen elastischen Schließelement versehen ist, das wahlweise je nach Kippstellung eine von zwei auf entgegengesetzten Seiten des Schenkels angeordneten beabstandeten Ventilöffnungen abschließt. Das elastische Schließelement ist mit einer Membran verbunden, die das Ventilgehäuse gegenüber dem den Elektromagneten enthaltenden Gehäuse abdichtet.

Aus den Patentschriften EP 1 013 942 B1, EP 1 316 749 B1, EP 0 916 049 B1 und EP 0 741 248 B1 sind elektromagnetisch betätigte Ventile bekannt, die einen vergleichbaren Aufbau aufweisen wie in der US 4,574,841 A. Die EP 0916049 B1 offenbart alle Merkmale des Oberbegriffs des Anspruchs 1.

Der Magnetanker und das Ventilglied sind jeweils starr miteinander verbunden, so dass Magnetanker und Ventilglied eine gemeinsame Schwenkachse aufweisen.

In dem Magnetanker ist jeweils ein Permanentmagnet vorgesehen, dem gegenüber zwei parallel zueinander verlaufende Polstücke eines Magnetkreises liegen, durch die der Permanentmagnet in die eine oder in die andere Richtung um die gemeinsame Schwenkachse verschwenkt werden kann.

Der Erfindung liegt die Aufgabe zugrunde, eine Vorrichtung zur Durchflussregelung eines flüssigen oder gasförmigen Mediums anzugeben, die energiesparend ist, d.h. eine deutlich geringere elektrische Ansteuerleistung für den Elektromagneten zur Ventilgliedbetätigung benötigt.

Die Aufgabe ist erfindungsgemäß durch eine Vorrichtung mit den Merkmalen im Anspruch 1 gelöst.

Gemäß der Erfindung ist die mindestens eine von dem Ventilglied gesteuerte Durchflussöffnung in einer zwischen Ventilanschlüssen eines Ventilgehäuses angeordneten Ventilkammer ausgebildet. Das Ventilglied ist um eine Achse, die vorzugsweise etwa parallel zur Schwenkachse des Magnetankers verläuft, schwenkbar in der Ventilkammer angeordnet. Die Ventilkammer ist gegenüber dem Elektromagneten mittels einer zugleich als Schwenklager für das Ventilglied dienenden Abdichtung abgedichtet. Durch diese Maßnahmen kann kein Medium zum magnetischen Antrieb des Ventilglieds gelangen. Korrosionen im Magnetraum sind dadurch minimiert. Im Ventilbereich der Vorrichtung kann das Totvolumen des Mediums gering gehalten werden. Insgesamt lässt sich die Vorrichtung aus Magnet- und Ventilteil einfacher nach außen abdichten.

Die erfindungsgemäße Vorrichtung hat den Vorteil, dass einerseits zum Schwenken des Magnetankers im Vergleich zu dessen axialem Verschieben eine geringere Bestromung des Elektromagneten erforderlich ist und andererseits durch das Vorhandensein mindestens eines Permanentmagneten im Magnetanker weniger Ansteuerleistung für den Elektromagneten zur Erzeugung einer auf dem Magnetanker wirkenden, gleich großen Magnetkraft benötigt wird. Beide Maßnahmen addieren das Energieeinsparungspotential bei der Ventilgliedbetätigung und führen zu einer deutlich geringeren Ansteuerleistung für den Elektromagneten und zu größerer Magnetkraft bei gleicher Funktionalität der Vorrichtung.

Die Magnetkraft des mindestens einen Permanentmagneten ist ausreichend, den Magnetanker in seinen beiden Endschwenkstellungen zu halten, in denen die mindestens eine Durchflussöffnung verschlossen bzw. freigegeben ist. Auf eine separate Ventilschließfeder kann verzichtet werden. Dies verringert den Aufwand und trägt zusätzlich zur Energieeinsparung bei, da beim Ventilöffnen durch Umschwenken des Magnetankers keine Rückstellkraft einer Ventilschließfeder überwunden werden muss.

Weitere besondere Erfindungsmerkmale sowie Ausgestaltungen des Erfindungsgegenstandes ergeben sich aus den weiteren Ansprüchen und der nachfolgenden Beschreibung.

Gemäß einer vorteilhaften Ausführungsform der Erfindung ist in den den Polstücken zugekehrten Seitenflächen des Mangetankers jeweils eine Nut enthalten, in die die Polstücke hineinragen und zusammen mit den ihnen zugekehrten Nutflanken die Luftspalte begrenzen. Durch diese Maßnahmen lassen sich in konstruktiv einfacher Weise die Luftspalte zwischen den Polstücken und Mangetanker realisieren.

Gemäß einer vorteilhaften Ausführungsform der Erfindung sind im Magnetanker zwei Permanentmagnete symmetrisch zu einem durch die Schwenkachse verlaufenden, auf den Magnetanker gefällten Lot angeordnet und durch einen die Schwenkachse umgebenden Bereich aus amagnetischem Material voneinander getrennt. Die Permanentmagnete erstrecken sich dabei bis in den Nutgrund der beiden Nuten, so dass ein magnetischer Kurzschluss innerhalb des Magnetankers zuverlässig ausgeschlossen ist. Durch das Vorsehen zweier Permanentmagnete wird die Haltekraft in den Schwenkendstellungen des Magnetankers vergrößert. Die Anordnung mindestens eines Permanentmagneten im Magnetanker zusammen mit der geschlossenen Bauform des Magnetkerns und der Polstücke in Form von Jochschenkeln hat den Vorteil, dass keine oder nur geringe magnetische Streufelder nach außen gelangen.

Gemäß einer vorteilhaften Ausführungsform der Erfindung ist in mindestens einem der zwischen den Polstücken und den Magnetanker gebildeten Luftspalte, vorzugsweise in zwei zur Schwenkachse diametral liegenden Luftspalten, ein Distanzstück aus amagnetischem Material angeordnet. Durch dieses oder diese Distanzstücke kann ein monostabiles Verhalten der Vorrichtung erreicht werden, da jedes Distanzstück einen großen magnetischen Widerstand aufweist und die Haltekraft des Permanentmagneten soweit schwächt, dass bei Wegfall der Bestromung der Erregerspule der Magnetanker durch eine geringe Rückstellkraft z.B. einer Rückstellfeder in die stabile Schwenkendstellung zurückschwenkt, in der Magnetanker und Polstücke ohne Zwischenlage der Distanzstücke unmittelbar aneinanderliegen.

Gemäß einer vorteilhaften Ausführungsform der Erfindung weist das Ventilglied einen Schließkopf, der mit einem die Durchflussöffnung umschließenden Ventilsitz zum Schließen und Freigeben der Durchflussöffnung zusammenwirkt, und einen den Schließkopf tragenden Betätigungshebel auf. Der Betätigungshebel ist mit einer die Abdichtung bildenden Dichtungsplatte aus elastischem Material verbunden, z. B. durch diese hindurchgeführt, und über mindestens ein Koppelglied mit dem Magnetanker verbunden. Durch diese Maßnahme lässt sich einerseits eine fertigungstechnisch einfache Übertragung der Schwenkbewegung des Magnetankers auf das Ventilglied realisieren und andererseits eine fertigungstechnisch vorteilhafte Herstellung von Ventilglied, Betätigungshebel und Dichtplatte in einem einzigen Verbund erzielen, was sich auch kostengünstig auf die Montage auswirkt.

Gemäß einer vorteilhaften Ausführungsform der Erfindung ist das mindestens eine Koppelglied als Blattfeder ausgebildet, die mit ihrem einen Federende am Magnetanker, vorzugsweise an der dem Betätigungshebel zugekehrten Unterseite des Magnetankers, befestigt ist und mit ihrem davon abgekehrten Federende an dem Betätigungshebel angreift, z. B. anliegt.

Gemäß einer bevorzugten Ausführungsform der Erfindung sind am Magnetanker, vorzugsweise an der Unterseite des Magnetankers, zwei Blattfedern symmetrisch so befestigt, dass sie mit ihren freien Federenden den Betätigungshebel beaufschlagen, vorzugsweise an voneinander abgekehrten Seiten dieses. Durch das Einsetzen von Blattfedern als Koppelglied werden vorteilhaft Toleranzen zwischen dem Schwenkweg des Magnetankers und dem Schwenkweg des Ventilglieds kompensiert. Bei Ausbildung des Elektromagneten mit monostabilem Verhalten dienen die Blattfedern zugleich zur Rückstellung des Magnetankers in seine stabile Schwenklage bei Wegfall der Bestromung der Erregerspule.

Die Erfindung ist nachfolgend anhand eines in den Zeichnungen dargestellten Ausführungsbeispiels näher erläutert. Es zeigen:
Fig. 1 einen Längsschnitt einer Vorrichtung zur Durchflussregelung eines flüssigen oder gasförmigen Mediums,

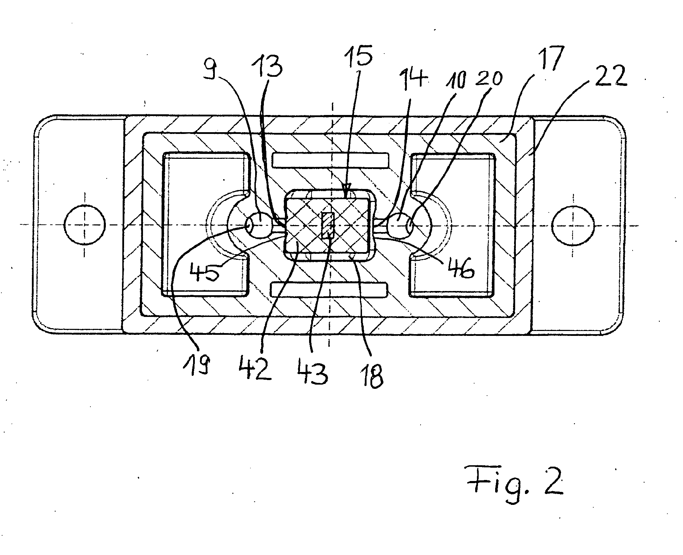

Fig. 2 einen Schnitt längs der Linie II - II in Fig. 1.

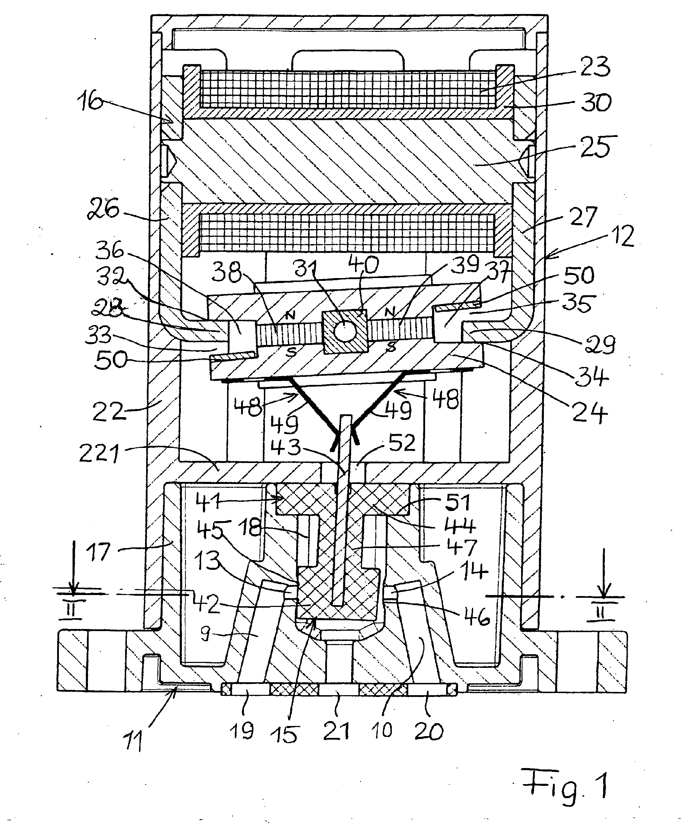

Die in Fig. 1 beispielhaft im Längsschnitt dargestellte Vorrichtung zur Durchflussregelung eines flüssigen oder gasförmigen Mediums, auch als fluides, fließendes oder strömendes Medium bezeichnet, ist in ein vom Medium durchströmtes Ventil 11 zur Durchflussregelung des Mediums und einen vom Medium getrennten, elektromagnetischen Antrieb 12 unterteilt. Prinzipiell weist die Vorrichtung mindestens eine Durchflussöffnung 13 für das Medium, ein die mindestens eine Durchflussöffnung 13 steuerndes Ventilglied 15 und einen das Ventilglied 15 betätigenden Elektromagneten 16 auf. Im dargestellten Ausführungsbeispiel ist das Ventil als 3/2-Wegeventil mit zwei vom Ventilglied 15 gesteuerten Durchflussöffnungen 13, 14 ausgeführt. Das Ventil 11 weist ein Ventilgehäuse 17 auf, in dem eine das Ventilglied 15 aufnehmende Ventilkammer 18 ausgebildet ist. Die beiden Durchflussöffnungen 13, 14 sind in der Kammerwand der Ventilkammer 18 ausgebildet und stehen über einen Ventilkanal 9, 10 mit jeweils einem Ventilanschluss 19 bzw. 20 am Ventilgehäuse 17 in Verbindung. Ein weiterer Ventilanschluss 21, der üblicherweise für den Mediumzufluss vorgesehen ist, mündet ebenfalls in der Ventilkammer 18.

Der in einem Magnetgehäuse 22 aufgenommene Elektromagnet 16 weist einen Magnetkreis mit mindestens einer Magnet- oder Erregerspule 23 und mit einem Magnetanker 24 auf, der mit dem Ventilglied 15 gekoppelt ist. Der Magnetkreis umfasst einen Magnetkern 25 und zwei auf den Stirnseiten des Magnetkerns 25 aufliegende Jochschenkel 26, 27, die an ihren magnetkernfernen Enden abgewinkelt sind und einander mit Abstand gegenüberliegende Polstücke 28, 29 bilden. Die auf einen Spulenkörper 30 aufgewickelte Erregerspule 23 ist auf den Magnetkern 25 aufgeschoben. Der Magnetanker 24 ist zwischen den beiden Polstücken 28, 29 der Jochschenkel 26, 27 um eine Schwenkachse 31 schwenkbeweglich angeordnet. Die Schwenkachse 31 verläuft z. B. quer zur Längsrichtung des Elektromagneten 16, z. B. horizontal. Der Mangetanker 24 ist dabei so ausgebildet, dass er jedes Polstück 28 bzw. 29 unter Belassung zweier Luftspalte 32, 33 bzw. 34, 35 zwischen Mangetanker 24 und Polstück 28 bzw. 29 übergreift. Hierzu ist in den den Polstücken 28, 29 zugekehrten Seitenflächen des Magnetankers 24 jeweils eine Nut 36 bzw. 37 eingebracht, in die die Polstücke 28, 29 hineinragen und zusammen mit den ihnen zugekehrten Nutflanken die genannten Luftspalte 32 bis 35 begrenzen. Im Magnetanker 24 sind zwei Permanentmagnete 38, 39 symmetrisch zu der durch die Schwenkachse 31 verlaufenden Mittellinie oder Symmetrieachse des Mangetankers 24 so angeordnet, dass sich ihr magnetischer Fluss über die Polstücke 28,29 schließt. Die beiden Permanentmagnete 38,39 sind durch einen die Schwenkachse 31 umschließenden Bereich 40 aus amagnetischem Material voneinander getrennt und erstrecken sich bis in den Nutgrund der beiden Nuten 36, 37. Die Permanentmagnete 38,39 sind parallel zur Mittellinie magnetisiert, so dass beispielsweise ihr Nordpol in Fig. 1 oben und ihr Südpol in Fig. 1 unten liegt, wie dies in Fig. 1 durch "N" und "S" angedeutet ist. Selbstverständlich kann die Polarisationsrichtung um 180° gedreht sein. Grundsätzlich ist es ausreichend, im Magnetanker 24 nur einen Permanentmagneten, z. B. den Permanentmagneten 38, vorzusehen. In diesem Fall muss der fehlende Permanentmagnet 39 durch amagnetisches Material ersetzt werden, um einen magnetischen Kurzschluss des Permanentmagneten 38 im Magnetanker 24 zu vermeiden. Das Vorsehen von zwei Permanentmagneten 38, 39 verstärkt jedoch die Haltekräfte zwischen Magnetanker 24 und den Polstücken 28, 29 in den beiden Schwenkendstellungen des Magnetankers 24.

Das mit dem Magnetanker 24 gekoppelte Ventilglied 15 ist z. B. um eine zur Schwenkachse 31 etwa parallele Achse schwenkbeweglich in der Ventilkammer 18 gehalten, wobei die Ventilkammer 18 gegenüber dem Magnetgehäuse 22 und dem Elektromagneten 16 mittels einer zugleich als Schwenklager für das Ventilglied 15 ausgebildeten Abdichtung 41 abgedichtet ist. Die Schwenkachse des Ventilgliedes 15 liegt im Bereich der Abdichtung 41. Das Ventilglied 15 weist einen Schließkopf 42 und einen den Schließkopf 42 tragenden Betätigungshebel 43 auf, der an einer die Abdichtung 41 bildenden Dichtungsplatte 44 aus elastischem Material befestigt ist, z. B. durch diese bis zum Schließkopf 42 hindurchgeführt ist. Mit dem Ende, das dem Ventilglied 15 abgewandt ist, ist der Betätigungshebel 43 durch einen Durchbruch 52 hindurch und in das Magnetgehäuse 22 geführt. Die Dichtungsplatte 44 liegt in einer im Ventilgehäuse 17 ausgebildeten Aussparung 51 ein und wird beim Zusammenbau von Magnetgehäuse 22 und Ventilgehäuse 17 von einem Boden 221 des Magnetgehäuses 22 in die Aussparung 51 eingepresst. Der Boden 221 schließt das Ventilgehäuse 17 gegenüber dem Magnetgehäuse 22 dicht ab und enthält den Durchbruch 52 für den Betätigungshebel 43. Beim Aufsetzen des Magnetgehäuses 22 auf das Ventilgehäuse 17 setzt sich der Boden 221 auf das Ventilgehäuse 17 und verspannt die Dichtungsplatte 44 in der Aussparung 51, während der Betätigungshebel 43 durch den Durchbruch 52 hindurchtritt. Der Schließkopf 42 wirkt zum wechselweisen Freigeben und Schließen der Durchflussöffnungen 13 und 14 mit einem die Durchflussöffnungen 13 bzw. 14 umgebenden Ventilsitz 45 bzw. 46 zusammen. Der Schließkopf 42 und die Dichtungsplatte 44 können über einen im Durchmesser kleineren Hals 47 miteinander einstückig verbunden sein. Das Ventilglied 15 mit Schließkopf 42, Hals 47 und Dichtungsplatte 44 kann einstückig aus weichelastischem Material geformt sein, an dem der Betätigungshebel 43 fest angreift. Dieser kann von diesem Material umschlossen sein, z. B. durch Umspritzen.

Die Übertragung der Schwenkbewegung des Magnetankers 24 auf den Betätigungshebel 43 des Ventilglieds 15 erfolgt über mindestens ein Koppelglied 48, das im Ausführungsbeispiel als Blattfeder 49 ausgeführt ist. Die Blattfeder 49 ist mit ihrem einen Federende am Magnetanker 24, vorzugsweise an der dem Betätigungshebel 43 zugekehrten Unterseite des Magnetankers 24, befestigt und greift mit ihrem davon abgekehrten Federende an dem Betätigungshebel 43 an. Im dargestellten Ausführungsbeispiel sind zwei Koppelglieder 48 vorgesehen, die als gleich gestaltete Blattfedern 49 ausgeführt sind. Die beiden Blattfedern 49 sind symmetrisch an dem Magnetanker 24, vorzugsweise an dessen Unterseite, befestigt und pressen sich mit ihrem magnetankerfemen Federenden an voneinander abgekehrte Seiten des Betätigungshebels 43 an. Wird die Kopplung zwischen Magnetanker 24 und Betätigungshebel 43 nur mit einer einzigen Blattfeder 49 hergestellt, so muss das magnetankerferne Ende der Blattfeder 49 fest mit dem Betätigungshebel 43 verbunden werden.

Die Funktion der Vorrichtung ist wie folgt:

In der in Fig. 1 skizzierten Schwenkendstellung des Magnetankers 24 schließt sich bei der angegebenen Polarisierung der Permanentmagnete 38,39 der Magnetfluss der Permanentmagnete 38, 39 über den oberen Teil des Magnetankers 24, über das Polstück 28, den Jochschenkel 26, den Magnetkern 25, den Jochschenkel 27, das Polstück 29 und den unteren Teil des Magnetankers 24. Über die Blattfedern 49 ist das Ventilglied 15 entsprechend geschwenkt und presst sich mit seinem Schließkopf 42 an den Ventilsitz 45 der Durchflussöffnung 13 an. Der Ventilanschluss 19 ist geschlossen. Das Medium kann ausschließlich von dem Ventilanschluss 21 über die freigegebene Durchflussöffnung 14 zum Ventilanschluss 20 fließen.

Wird ein Erregerstrom in passender Richtung an die Erregerspule 23 gelegt, so fließt ein dadurch erzeugter Magnetfluss vom Magnetkern 25 über den Jochschenkel 26, das Polstück 28, so dass ein Nordpol am Polstück 28 entsteht, den Luftspalt 33, den unteren Teil des Magnetankers 24, den Luftspalt 34, das Polstück 29 und den Jochschenkel 27 zum Magnetkern 25. Der magnetische Widerstand des Luftspaltes 33 wird überwunden. Der Magnetanker 24 wird vom Polstück 28 angezogen. Die Nordpole stoßen sich gegenseitig ab und die Nord-/Südpole ziehen sich gegenseitig an. Der Magnetanker 24 schwenkt in Uhrzeigersinn in seine andere Endlage, wobei der Betätigungshebel 43 des Ventilglieds 15 von den Blattfedern 49 entgegen dem Uhrzeigersinn geschwenkt wird. Infolge der Schwenklagerung durch die Dichtungsplatte 44 hebt der Schließkopf 42 des Ventilglieds 15 zur Seite vom Ventilsitz 45 ab. Er wird an den anderen Ventilsitz 46 angepresst. Die Durchflussöffnung 13 ist freigegeben und die Durchflussöffnung 14 verschlossen. Der Ventilanschluss 20 ist gesperrt und die Mediumströmung erfolgt über Ventilanschluss 21 und Ventilanschluss 19. Der Magnetfluss der Permanentmagnete 38, 39 sorgt auch in dieser Schwenkendlage des Magnetankers 24 für ausreichend große Haltekräfte, so dass auch diese Schwenkendstellung des Magnetankers 24 stabil ist.

Soll der Magnetanker 24 wieder in seine in Fig. 1 dargestellte Schwenkendstellung zurückgestellt werden, so ist an die Erregerspule 23 ein Strom umgekehrter Polarität zu legen. Der hierdurch erzeugte Magnetfluss im Magnetkreis schließt sich vom Magnetkern 25 über den Jochschenkel 27, das Polstück 29, den Luftspalt 33, das Polstück 28 und den Jochschenkel 26 zum Magnetkern 25. Der magnetische Widerstand des Luftspalts 34 wird überwunden, und die am Polstück 29 auftretende Polarität zieht den Magnetanker 24 an, so dass dieser wieder die in Fig. 1 skizzierte Schwenkendstellung zurückkehrt. Die Haltekräfte der Permanentmagnete 38, 39 sorgen auch hier für eine stabile Endlage des Magnetankers 24. Vom umschwenkenden Magnetanker 24 wird der Schließkopf 42 des Ventilglieds 15 über den Betätigungshebel 43 im Uhrzeigersinn zurückgeschwenkt, vom Ventilsitz 46 abgehoben und auf den Ventilsitz 45 aufgepresst.

Will man ein monostabiles Verhalten der Vorrichtung erzielen, so wird in mindestens einem der an den Polstücken 28, 29 ausgebildeten Luftspalte 32 bis 35 ein amagnetisches Distanzstück 50 angeordnet. Im skizzierten Ausführungsbeispiel sind zwei amagnetische Distanzstücke 50 in zwei diametral zur Schwenkachse 31 liegenden Luftspalten 33,35 angeordnet. Dabei sind die Distanzstücke 50 auf den Nutflanken der Nuten 36, 37 befestigt. Alternativ können die Distanzstücke 50 auch auf den die Luftspalte 33 bzw. 35 begrenzenden Flächen der Polstücke 28, 29 befestigt sein. Die in Fig. 1 skizzierte Schwenkendstellung des Magnetankers 24 ist dann dessen stabile Endlage. Zum Schwenken in die andere Endlage wird - wie zuvor beschrieben - die Erregerspule 23 geeignet bestromt, so dass der Magnetanker 24 in seine andere Schwenkendstellung übergeht, in welcher das Ventilglied 15 die Durchflussöffnung 13 freigibt und die Durchflussöffnung 14 verschließt. In dieser Schwenkendstellung liegt der Magnetanker 24 über die Distanzstücke 50 an den Polstücken 28, 29 an. Durch den großen magnetischen Widerstand dieser Distanzstücke 50 ist die magnetische Haltekraft der Permanentmagnete 28, 39 sehr gering, und bei Wegfall der Bestromung der Erregerspule 23 drehen die Blattfedern 49 den Magnetanker 24 wieder in seine in Fig. 1 dargestellte stabile Schwenkendstellung zurück.

Selbstverständlich ist es möglich, das Ventil 11 auch als 2/2-Wegeventil auszuführen. In diesem Fall entfallen die Durchflussöffnung 14 in der Ventilkammer 18 und der Ventilanschluss 20 am Ventilgehäuse 17. Durch Schließen und Öffnen der Durchflussöffnung 13 wird der Mediumfluss durch das Ventil 11 gesperrt oder ermöglicht.

## Patentansprüche

1. Vorrichtung zur Durchflussregelung eines flüssigen oder gasförmigen Mediums, mit einem mindestens eine Durchflussöffnung (13, 14) für das Medium steuernden Ventilglied (15) und einem das Ventilglied (15) betätigenden Elektromagneten (16), der einen Magnetkreis mit mindestens einer Erregerspule (23) und einem mit dem Ventilglied (15) gekoppelten Magnetanker (24) aufweist, wobei die mindestens eine Durchflussöffnung (13, 14) in einer zwischen Ventilanschlüssen (19, 20, 21) eines Ventilgehäuses (17) angeordneten Ventilkammer (18) ausgebildet ist, und das Ventilglied (15) um eine Achse schwenkbar in der Ventilkammer (18) angeordnet ist und die Ventilkammer (18) gegenüber dem Elektromagneten (16) mittels einer zugleich als Schwenklager für das Ventilglied (15) ausgebildeten Abdichtung (41) abgedichtet ist, **dadurch gekennzeichnet, dass** der Magnetanker (24) zwischen zwei im Magnetkreis vorhandenen, einander gegenüberliegenden Polstücken (28, 29) um eine Schwenkachse (31) schwenkbeweglich angeordnet und so ausgebildet ist, dass er jedes Polstück (28 bzw. 29) unter Belassung zweier Luftspalte (32, 33 bzw. 34, 35) zwischen Magnetanker (24) und Polstück (28 bzw. 29) übergreift, und im Magnetanker (24) mindestens ein Permanentmagnet (38, 39) so angeordnet ist, dass dessen Magnetfluss sich über die Polstücke (28, 29) schließt.

2. Vorrichtung nach Anspruch 1, **dadurch gekennzeichnet, dass** in den den Polstücken (28, 29) zugekehrten Seitenflächen des Magnetankers (24) jeweils eine Nut (36 bzw. 37) enthalten ist, in die das Polstück (28 bzw. 29) hineinragt und zusammen mit den ihm zugekehrten Nutflanken die Luftspalte (32, 33 bzw. 34, 35) begrenzt.

3. Vorrichtung nach Anspruch 2, **dadurch gekennzeichnet, dass** im Magnetanker (24) zwei Permanentmagnete (38, 39) symmetrisch zu einer durch die Schwenkachse (31) des Magnetankers (24) verlaufenden Mittellinie des Magnetankers (24) angeordnet sind, die durch einen die Schwenkachse (31) umgebenden Bereich (40) aus amagnetischen Material voneinander getrennt sind und sich bis in den Nutgrund der beiden Nuten (36, 37) erstrecken.

4. Vorrichtung nach einem der Ansprüche 1 bis 3, **dadurch gekennzeichnet, dass** in mindestens einem der an den Polstücken (28, 29) gebildeten Luftspalte (32, 33, 34, 35) ein amagnetisches Distanzstück (50) angeordnet ist.

5. Vorrichtung nach Anspruch 4, **dadurch gekennzeichnet, dass** in zwei diametral zur Schwenkachse (31) liegenden Luftspalten (33, 35) jeweils ein Distanzstück (50) an dem Polstück (28 bzw. 29) oder an der Nutflanke festgelegt ist.

6. Vorrichtung nach einem der Ansprüche 1 bis 5, **dadurch gekennzeichnet, dass** das Ventilglied (15) um eine Achse schwenkbar in der Ventilkammer (18) angeordnet ist, die etwa parallel zur Schwenkachse (31) des Magnetankers (24) verläuft.

7. Vorrichtung nach einem der Ansprüche 1 bis 6, **dadurch gekennzeichnet, dass** das Ventilglied (15) einen Schließkopf (42), der mit einem die Durchflussöffnung (13, 14) umschließenden Ventilsitz (45, 46) zum Schließen und Freigeben der Durchflussöffnung (13, 14) zusammenwirkt, und einen den Schließkopf (42) tragenden Betätigungshebel (43) aufweist, der mit einer die Abdichtung (41) bildenden Dichtungsplatte (44) aus elastischem Material verbunden ist und der über mindestens ein Koppelglied (48) mit dem Magnetanker (24) verbunden ist.

8. Vorrichtung nach Anspruch 7, **dadurch gekennzeichnet, dass** der Schließkopf (42) und die Dichtungsplatte (44) miteinander einstückig verbunden sind, und das Ventilglied (15), gebildet aus Schließkopf (42), Hals (47) und Dichtungsplatte (44), einstückig aus weichelastischem Material gebildet ist, an dem der Betätigungshebel (43) angreift, der von diesem Material fest umschlossen ist.

9. Vorrichtung nach Anspruch 7 oder 8, **dadurch gekennzeichnet, dass** das mindestens eine Koppelglied (48) eine Blattfeder (49) ist, die mit ihrem einen Federende am Magnetanker (24) befestigt ist und mit ihrem davon abgekehrten Federende an dem Betätigungshebel (43) angreift.

10. Vorrichtung nach Anspruch 9, **dadurch gekennzeichnet, dass** am Magnetanker (24) zwei Blattfedern (49) so befestigt sind, dass sie mit ihren freien Federenden den Betätigungshebel (43) beaufschlagen.

11. Vorrichtung nach Anspruch 9 oder 10, **dadurch gekennzeichnet, dass** die beiden Blattfedern (49) den Betätigungshebel (43) an dessen voneinander abgekehrten Seiten beaufschlagen.

## Claims

1. A device for a flow control of a liquid or a gaseous medium, comprising a valve element (15) controlling at least one flow opening (13, 14) for the medium and an electromagnet (16) actuating said valve element (15), said electromagnet comprising a magnetic circuit with at least one excitation coil (23) and a solenoid armature (24) coupled to said valve element (15), said at least one flow opening (13, 14) being formed in a valve chamber (18) disposed between valve ports (19, 20, 21) of a valve housing (17), and said valve element (15) being disposed in said valve chamber (18) such that it is swivelable about an axis, and said valve chamber (18) being sealed against said electromagnet (16) with a seal (41) which is simultaneously configured as a rocker pivot for said valve element (15),
**characterized in that** said solenoid armature (24) is disposed between two diametrically opposed pole pieces (28, 29) located in the magnetic circuit such that said solenoid armature is swivelable about a swivel axis (31) and is configured such as to extend beyond each of said pole pieces (28 and 29, resp.) leaving two air gaps (32, 33 and 34, 35, resp.) between solenoid armature (24) and pole piece (28 and 29, resp.), and at least one permanent magnet (38, 39) is disposed in said solenoid armature (24) such that its magnetic flux closes by said pole pieces (28, 29).

2. The device of claim 1, **characterized in that** lateral surfaces of said solenoid armature (24) that are facing said pole pieces (28, 29) are each provided with a groove (36 and 37, resp.), into which groove said pole piece (28 and 29, resp.) is protruding and limits said air gaps (32, 33 and 34, 35, resp.) together with groove flanks facing said pole piece.

3. The device of claim 2, **characterized in that** two permanent magnets (38, 39) are disposed in said solenoid armature (24) symmetrically with respect to a center line of said solenoid armature (24), extending through said swivel axis (31) of said solenoid armature (24), and are separated from each other by a region (40) composed of amagnetic material that encloses said swivel axis (31) and extends into the groove base of said two grooves (36, 37).

4. The device of anyone of claims 1 to 3, **characterized in that** in at least one of said air gaps (32, 33, 34, 35) formed on said pole pieces (28, 29) an amagnetic spacer is disposed.

5. The device of claim 4, **characterized in that** in two air gaps (33, 35) situated diametrically with respect to said swivel axis (31) each a spacer (50) is fastened on the pole piece (28 and 29, resp.) or on the groove flank.

6. The device of anyone of claims 1 to 5, **characterized in that** said valve element (15) is disposed in said valve chamber (18) such that it is swivelable about an axis which extends substantially parallel to said swivel axis (31) of said solenoid armature (24).

7. The device of anyone of claims 1 to 6, **characterized in that** said valve element (15) comprises a closing head (42) interacting with a valve seat (45, 46) that encloses said flow opening (13, 14) to close and open said flow opening (13, 14), and an actuating lever (43) carrying said closing head (42) and being connected to a sealing plate (44) composed of an elastic material and forming said seal (41) and connected by at least one coupling element (48) to said solenoid armature (24).

8. The device of claim 7, **characterized in that** said closing head (42) and said sealing plate (44) are interconnected as a single piece, and said valve element (15), formed by closing head (42), neck (47) and sealing plate (44), is formed as one piece out of soft elastic material, on which said actuating lever (43) engages, which is securely enclosed by this material.

9. The device of claim 7 or 8, **characterized in that** said at least one coupling element (48) is a leaf spring (49) having its one spring end attached to said solenoid armature (24) and its other opposite spring end engaging on said actuating lever (43).

10. The device of claim 9, **characterized in** two leaf springs (49) are attached to said solenoid armature (24) such that they act by their free spring ends on said actuating lever (43).

11. The device of claim 9 or 10, **characterized in that** said two leaf springs (49) act on said actuating lever (43) on its opposite sides.

## Revendications

1. Dispositif servant à réguler le débit d'un milieu liquide ou gazeux, comprenant au moins une ouverture d'écoulement (13, 14) pour l'organe de soupape (15) commandant le milieu et un électroaimant (16) actionnant l'organe de soupape (15), lequel présente un circuit magnétique pourvu d'au moins une bobine d'excitation (23) et un induit magnétique (24) couplé à l'organe de commande (15), sachant que l'ouverture d'écoulement (13, 14) au moins au nombre de une est réalisée dans une chambre de soupape (18) disposée entre des raccords de soupape (19, 20, 21) d'un carter de soupape (17) et que l'organe de soupape (15) est disposé dans la chambre de soupape (18) de manière à pouvoir pivoter autour d'un axe et que la chambre de soupape (18) est étanchéifiée par rapport à l'électroaimant (16) au moyen d'un système d'étanchéification (41) réalisée dans le même temps sous la forme d'un palier pivotant pour l'organe de soupape (15), **caractérisé en ce que** l'induit magnétique (24) est disposé de manière mobile en pivotement autour d'un axe de pivotement (31) entre deux pièces polaires (28, 29) présentes dans le circuit magnétique, se faisant face l'une l'autre et est réalisé de telle manière qu'il recouvre chaque pièce polaire (28 ou 29) en laissant deux entrefers (32, 33 ou 34, 35) entre l'induit magnétique (24) et la pièce polaire (28 ou 29), et **en ce qu'**au moins un aimant permanent (38, 39) est disposé dans l'induit magnétique (24) de telle manière que le flux magnétique de l'aimant permanent est fermé par l'intermédiaire des pièces polaires (28, 29).

2. Dispositif selon la revendication 1, **caractérisé en ce qu'**est contenue dans les faces latérales, retournées vers les pièces polaires (28, 29), de l'induit magnétique (24), respectivement une rainure (36 ou 37), dans laquelle la pièce polaire (28 ou 29) fait saillie et délimite, conjointement avec les flancs de rainure retournés vers la pièce polaire, les entrefers (32, 33 ou 34, 35).

3. Dispositif selon la revendication 2, **caractérisé en ce que** sont disposés, dans l'induit magnétique (24), de manière symétrique par rapport à une ligne médiane de l'induit magnétique (24), s'étendant à travers l'axe de pivotement (31) de l'induit magnétique (24), deux aimants permanents (38, 39), lesquels sont séparés l'un de l'autre par une zone (40), entourant l'axe de pivotement (31), en matériau amagnétique et s'étendent jusque dans le fond de rainure des deux rainures (36, 37).

4. Dispositif selon l'une quelconque des revendications 1 à 3, **caractérisé en ce qu'**une pièce d'écartement (50) amagnétique est disposée dans au moins un des entrefers (32, 33, 34, 35) formés au niveau des pièces polaires (28, 29).

5. Dispositif selon la revendication 4, **caractérisé en ce que** respectivement une pièce d'écartement (50) est fixée au niveau de la pièce polaire (28 ou 29) ou au niveau du flanc de rainure dans deux entrefers (33, 35) situés de manière diamétrale par rapport à l'axe de pivotement (31).

6. Dispositif selon l'une quelconque des revendications 1 à 5, **caractérisé en ce que** l'organe de soupape (15) est disposé dans la chambre de soupape (18) de manière à pouvoir pivoter autour d'un axe, laquelle s'étend à peu près de manière parallèle par rapport à l'axe de pivotement (31) de l'induit magnétique (24).

7. Dispositif selon l'une quelconque des revendications 1 à 6, **caractérisé en ce que** l'organe de soupape (15) présente une tête de fermeture (42), qui coopère avec un siège de soupape (45, 46) renfermant l'ouverture d'écoulement (13, 14) afin de fermer et de dégager l'ouverture d'écoulement (13, 14), et un levier d'actionnement (43) supportant la tête de fermeture (42), lequel levier d'actionnement est relié à un panneau d'étanchéité (44), formant le système d'étanchéification (41), en matériau élastique et qui est relié, par l'intermédiaire au moins d'un organe de couplage (48) à l'induit magnétique (24).

8. Dispositif selon la revendication 7, **caractérisé en ce que** la tête de fermeture (42) et le panneau d'étanchéité (44) sont reliés l'un à l'autre d'un seul tenant, et **en ce que** l'organe de soupape (15), formé à partir de la tête de fermeture (42), du col (47) et du panneau d'étanchéité (44), est formé d'un seul tenant à partir d'un matériau élastique souple, au niveau duquel le levier d'actionnement (43) vient en prise, lequel est entouré de manière solidaire par ledit matériau.

9. Dispositif selon la revendication 7 ou 8, **caractérisé en ce que** l'organe de couplage (48) au moins au nombre de un est un ressort à lames (49), qui est fixé au niveau de l'induit magnétique (24) par l'une de ses extrémités de ressort et qui vient en prise par l'extrémité de ressort opposée à cette dernière, au niveau du levier d'actionnement (43).

10. Dispositif selon la revendication 9, **caractérisé en ce que** deux ressorts à lames (49) sont fixés au niveau de l'induit magnétique (24) de telle manière qu'ils sollicitent le levier d'actionnement (43) par leurs extrémités de ressort dégagées.

11. Dispositif selon la revendication 9 ou 10, **caractérisé en ce que** les deux lames de ressort (49) sollicitent le levier d'actionnement (43) au niveau des côtés de ce dernier opposés les uns aux autres.
